(19) Europäisches Patentamt
European Patent Office
Office européen des brevets

(11) **EP 4 271 026 B1**

(12) **EUROPEAN PATENT SPECIFICATION**

(45) Date of publication and mention
of the grant of the patent:
**29.04.2026 Bulletin 2026/18**

(21) Application number: **21934047.8**

(22) Date of filing: **01.04.2021**

(51) International Patent Classification (IPC):
*H04W 24/02* (2009.01)    *H04B 7/024* (2017.01)
*H04B 7/06* (2006.01)    *H04L 1/00* (2006.01)
*H04L 1/06* (2006.01)    *H04L 5/00* (2006.01)

(52) Cooperative Patent Classification (CPC):
**H04L 5/0057; H04B 7/024; H04B 7/063;**
**H04L 1/0026; H04L 1/0028; H04L 1/06;**
H04L 5/0051; H04L 2001/0092

(86) International application number:
**PCT/CN2021/085141**

(87) International publication number:
**WO 2022/205390 (06.10.2022 Gazette 2022/40)**

(54) **INFORMATION PROCESSING METHOD AND TERMINAL DEVICE**

INFORMATIONSVERARBEITUNGSVERFAHREN UND ENDGERÄTEVORRICHTUNG

PROCÉDÉ DE TRAITEMENT D'INFORMATIONS ET DISPOSITIF TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.11.2023 Bulletin 2023/44**

(73) Proprietor: **GUANGDONG OPPO MOBILE
TELECOMMUNICATIONS
CORP., LTD.
Dongguan, Guangdong 523860 (CN)**

(72) Inventors:
• **CHEN, Wenhong**
**Dongguan, Guangdong 523860 (CN)**
• **TIAN, Jiejiao**
**Dongguan, Guangdong 523860 (CN)**

(74) Representative: **Taor, Simon Edward William et al
Venner Shipley LLP
200 Aldersgate
London EC1A 4HD (GB)**

(56) References cited:
**CN-A- 109 391 404    US-A1- 2020 373 985**

• **MEDIATEK INC: "CSI enhancement for NCJT and FR1 FDD reciprocity", vol. RAN WG1, no. e-Meeting; 20210125 - 20210205, 19 January 2021 (2021-01-19), XP051971054, Retrieved from the Internet <URL:https://ftp.3gpp.org/tsg_ran/ WG1_RL1/TSGR1_104-e/Docs/R1-2100583.zip R1-2100583 CSI enhancement for NCJT and FR1 FDD reciprocity.docx> [retrieved on 20210119]**
• **NEC: "Discussion on CSI enhancement for multi-TRP transmission", vol. RAN WG1, no. e-Meeting; 20210125 - 20210205, 19 January 2021 (2021-01-19), XP051971293, Retrieved from the Internet <URL:https://ftp.3gpp.org/tsg_ran/ WG1_RL1/TSGR1_104-e/Docs/R1-2100954.zip R1-2100954.docx> [retrieved on 20210119]**
• **ERICSSON: "CSI feedback for multi-TRP", vol. RAN WG1, no. Reno, USA; 20171127 - 20171201, 18 November 2017 (2017-11-18), XP051370340, Retrieved from the Internet <URL:http:// www.3gpp.org/ftp/tsg%5Fran/WG1%5FRL1/ TSGR1%5F91/Docs/> [retrieved on 20171118]**
• **MEDIATEK INC.: "CSI enhancement for NCJT and FR1 FDD reciprocity", 3GPP DRAFT; R1-2100583, 3RD GENERATION PARTNERSHIP PROJECT (3GPP), vol. RAN WG1, no. e-Meeting; 20210125 - 20210205, 19 January 2021 (2021-01-19), XP051971054**

- NEC: "Discussion on CSI enhancement for multi-TRP transmission", 3GPP DRAFT; R1-2100954, 3RD GENERATION PARTNERSHIP PROJECT (3GPP), vol. RAN WG1, no. e-Meeting; 20210125 - 20210205, 19 January 2021 (2021-01-19), XP051971293

- OPPO: "CSI enhancements: MTRP and FR1 FDD reciprocity", 3GPP DRAFT; R1-2100124, 3RD GENERATION PARTNERSHIP PROJECT (3GPP), vol. RAN WG1, no. e-Meeting; 20210125 - 20210205, 18 January 2021 (2021-01-18), XP051970244

## Description

### TECHNICAL FIELD

The present disclosure relates to the communication field, and more specifically, relates to an information processing method and a terminal device.

### BACKGROUND

In order for a network device to perform reasonable scheduling, a terminal needs to feed back downlink Channel State Information (CSI), so that the network device can determine scheduling information for the terminal, such as the number of transmission layers, a precoding matrix, a transmission beam, and a modulation and coding scheme. In the case of measuring the CSI of multiple coordinated Transmission Reception Points (TRPs), how the terminal feeds back the currently recommended measurement hypothesis and corresponding rank information in the CSI is a problem that needs to be considered. Related technologies are known from MediaTek Inc.: "CSI enhancement for NCJT and FR1 FDD reciprocity", 3GPP draft, R1-2100583. This document discloses that the UE can feedback, using the CRI inside the CSI report, one or two Channel Measurement Resources (CMRs) corresponding to the selected single-or joint-TRP measurement hypothesis.

### SUMMARY

The invention is defined by the independent claims. Preferred embodiments are defined by the dependent claims.

### BRIEF DESCRIPTION OF THE DRAWINGS

FIG. 1 is a schematic diagram of an application scenario according to an embodiment of the present disclosure.
FIG. 2 and FIG. 3 are schematic diagrams of downlink non-coherent transmission based on multiple PDCCHs.
FIG. 4 is a schematic diagram of downlink non-coherent transmission based on a single PDCCH.
FIG. 5 is a schematic flowchart of an information processing method according to an embodiment of the present disclosure.
FIG. 6 is a schematic block diagram of a terminal device according to an embodiment of the present disclosure.
FIG. 7 is a schematic block diagram of a terminal device according to another embodiment of the present disclosure.
FIG. 8 is a schematic block diagram of a communication device according to an embodiment of the present disclosure.
FIG. 9 is a schematic block diagram of a chip according to an embodiment of the present disclosure.
FIG. 10 is a schematic block diagram of a communication system according to an embodiment of the present disclosure.

### DETAILED DESCRIPTION

The technical solutions in the embodiments of the present disclosure will be described below in conjunction with the drawings in the embodiments of the present disclosure.

The technical solutions of the embodiments of the present disclosure can be applied to various communication systems such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of a NR system, a LTE-based access to unlicensed spectrum (LTE-U) system, a NR-based access to unlicensed spectrum (NR-U) system, a Non-Terrestrial Network (NTN) system, a Universal Mobile Telecommunication System (UMTS), a Wireless Local Area Network (WLAN), a Wireless Fidelity (Wi-Fi), a 5th-Generation (5G) communication system or other communication systems.

Generally, traditional communication systems support a limited number of connections and are easy to implement. However, with the development of communication technologies, mobile communication systems will not only support traditional communications, but will also support, for example, Device to Device (D2D) communication, Machine to Machine (M2M) communication, Machine Type Communication (MTC), Vehicle to Vehicle (V2V) communication, Vehicle to everything (V2X) communication, etc. The embodiments of the present disclosure can also be applied to these communication systems.

Optionally, the communication system in the embodiments of the present disclosure can be applied to a carrier aggregation (CA) scenario, a dual connectivity (DC) scenario, or a standalone (SA) deployment scenario.

Optionally, the communication system in the embodiments of the present disclosure may be applied to an unlicensed spectrum, where the unlicensed spectrum may also be considered as a shared spectrum; or, the communication system in the embodiments of the present disclosure may also be applied to a licensed spectrum, where the licensed spectrum can also be considered as an unshared spectrum.

Various embodiments are described in conjunction with the network device and the terminal device in the embodiments of the present disclosure, where the terminal device may also be referred to as User Equipment (UE), an access terminal, a subscriber unit, a subscriber station, a mobile station, a remote station, a remote terminal, a mobile device, a user terminal, a terminal, a wireless communication device, a user agent, a user device, or the like.

The terminal device may be a station (ST) in the WLAN, or may be a cellular phone, a cordless phone, a Session Initiation Protocol (SIP) phone, a Wireless Local Loop (WLL) station, a personal digital Personal Digital Assistant (PDA) device, a handheld devices with wireless communication capabilities, a computing device or other processing devices connected to a wireless modem, an in-vehicle device, a wearable device, a terminal device in next-generation communication systems such as a NR network, or a terminal device in a future evolved public land mobile network (PLMN) network, etc.

In the embodiments of the present disclosure, the terminal device can be deployed on land, including indoor or outdoor, handheld, wearable, or vehicle-mounted; or it can be deployed on water (such as on a ship, etc.); or it can be deployed in the air (such as on an airplane, a balloon, a satellite, etc.).

In the embodiments of the present disclosure, the terminal device may be a mobile phone, a Pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example instead of limitation, in the embodiments of the present disclosure, the terminal device may also be a wearable device. The wearable device can also be referred to as a wearable smart device, which is a general term for wearable devices which are designed and developed by using wearable technology to intelligently design and develop everyday wear, such as glasses, gloves, watches, clothing and shoes. The wearable device is a portable device that is directly worn on the body or integrated into user's clothes or accessories. The wearable device is not only a hardware device, but also realizes powerful functions through software support, data interaction, and cloud interaction. In a broad sense, the wearable smart device includes full-featured and large-sized devices of which complete or partial functions can be achieved without relying on smart phones, such as smart watches or smart glasses, and devices which focus on only a certain type of application function and need to cooperate with other devices such as smart phones, such as various smart bracelets and smart jewelry for physical sign monitoring.

In the embodiments of the present disclosure, the network device can be a device used to communicate with a mobile device. The network device can be an access point (AP) in WLAN, a Base Transceiver Station (BTS) in GSM or CDMA, or a NodeB (NB) in WCDMA, and can also be an Evolutional Node B (eNB or eNodeB) in LTE, a relay station, an access point, a vehicle-mounted device, a wearable device, a network device (gNB) in a NR network, a network device in future evolutional PLMN network, a network device in a NTN network, or the like.

As an example but not limitation, in the embodiments of the present disclosure, the network device may have mobile features, for example, the network device may be a moving device. Optionally, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, etc. Optionally, the network device may also be a base station set in a location such as on land or in water.

In the embodiments of the present disclosure, the network device may provide services for a cell, and the terminal device communicates with the network device through transmission resources (for example, frequency domain resources, or spectrum resources) used by the cell. The cell may be a cell corresponding to the network device (e.g., a cell corresponding to the base station), or belong to a macro base station or a base station corresponding to a small cell. The small cell herein can include a Metro cell, a Micro cell, a Pico cell, a Femto cell, etc., which are characterized in small coverage and low transmission power, and are suitable for providing high-rate data transmission services.

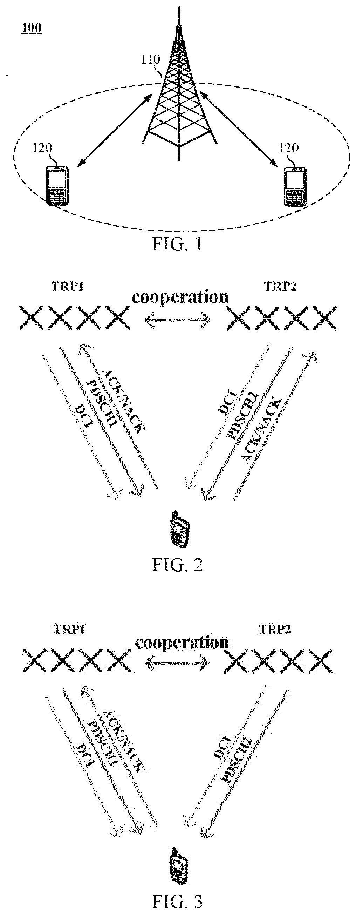

FIG. 1 exemplarily shows a communication system 100. The communication system includes one network device 110 and two terminal devices 120. Optionally, the communication system 100 may include multiple network devices 110, and other numbers of terminal devices 120 may be included in the coverage of each network device 110, which is not limited in the embodiments of the present disclosure.

Optionally, the communication system 100 may further include other network entities such as a mobility management entity (MME), and an Access and Mobility Management Function (AMF), which is not limited in the embodiments of the present disclosure.

The network device may further include an access network device and a core network device. That is, the wireless communication system further includes a plurality of core networks for communicating with the access network device. The access network device may be a long-term evolution (LTE) system, a next-generation radio (NR) system, or an evolutional node B (referred to as eNB or e-NodeB for short) in an authorized auxiliary access long-term evolution (LAA-LTE) system, a macro base station, a micro base station (also called "small base station"), a pico base station, an access point (AP), a transmission point (TP) or a new generation base station Node B (gNodeB), etc.

It should be understood that the device with a communication function in the network and/or system in the embodiments of the present disclosure may be referred to as the communication device. Taking the communication system shown in FIG. 1 as an example, the communication device may include a network device and terminal devices which have the communication function. The network device and the terminal devices may be the specific devices as described in the embodiments of the present disclosure, which will not be repeated here. The communication device may also include other devices in the communication system, such as a network controller, a mobility management entity, and other network entities, which are not limited in the embodiments of the present disclosure.

It should be understood that the terms "system" and "network" are often used interchangeably herein. The term "and/or" used herein is merely to describe relative relationships of relative objects, indicating that there can be three kinds of relationships. For example, A and/or B can indicate three cases where A exists alone, A and B exist simultaneously, or B exists alone. In addition, the character "/" used herein generally indicates that the related objects before and after this character are in an "or" relationship.

It should be understood that "indicate" mentioned in the embodiments of the present disclosure may be a direct indication or an indirect indication, or may represent an associated relationship. For example, if A indicates B, it may represent that A directly indicates B, for example, B can be obtained from A; or it may represent that A indicates B indirectly, for example, A indicates C, and B can be obtained from C; or it may represent that there is an associated relationship between A and B.

In the description of the embodiments of the present disclosure, the term "corresponding" may indicate that there is a direct or indirect corresponding relationship between two objects, or may indicate that there is an associated relationship, a relationship of indicating and being indicated, or a relationship of configuring and being configured between the two objects, and so on.

In order to facilitate the understanding of the technical solutions of the embodiments of the present disclosure, relevant technologies of the embodiments of the present disclosure are described below. The following relevant technologies can be arbitrarily combined with the technical solutions of the embodiments of the present disclosure as optional solutions, which all fall within the protection scope of the embodiments of the present disclosure.

1. Downlink Non-coherent Transmission

Downlink and uplink non-coherent transmission based on multiple TRPs is introduced in the NR system. A backhaul (backhaul network) connection between TRPs may be ideal or non-ideal. Under the ideal backhaul, TRPs can perform information interaction quickly and dynamically. Under the non-ideal backhaul, due to the large delay, the TRPs can only perform information interaction quasi-statically. In the downlink non-coherent transmission, multiple TRPs can employ different control channels to independently schedule multiple Physical Downlink Shared Channel (PDSCH) transmissions of one terminal, or the same control channel can be employed to schedule transmissions of different TRPs. The data of different TRPs uses different transport layers, and the latter can only be used in the case of the ideal backhaul.

For downlink transmission scheduled by multiple Physical Downlink Control Channels (PDCCHs), the scheduled PDSCHs may be transmitted in the same slot or in different slots. The terminal needs to support simultaneous reception of PDCCHs and PDSCHs from different TRPs. When the terminal feeds back Acknowledgement/Non-Acknowledgement (ACK/NACK) and CSI, the ACK/NACK and CSI can be respectively fed back to different TRPs that transmit the corresponding PDSCH (as shown in FIG. 2), or the ACK/NACK and CSI can be combined and fed back to one TRP (as shown in FIG. 3). The former can be applied to both the ideal backhaul and non-ideal backhaul scenarios, while the latter can only be used in the ideal backhaul scenarios. Downlink control information (DCI) that is transmitted by different TRPs for scheduling PDSCHs may be carried by different CORESETs, that is, multiple CORESETs are configured by the network side. Each TRP performs scheduling using its own CORESET, that is, different TRPs can be distinguished through the CORESETs. For example, the network device may configure a CORESET pool index for each CORESET, and different indexes correspond to different TRPs. When the terminal feeds back the CSI, it needs to feed back the CSI corresponding to each TRP respectively. The CSI includes contents such as Rank Indication (RI), Precoding Matrix Indicator (PMI), Channel Quality Indication (CQI), etc., and can be used for respective TRPs to perform scheduling of downlink transmission.

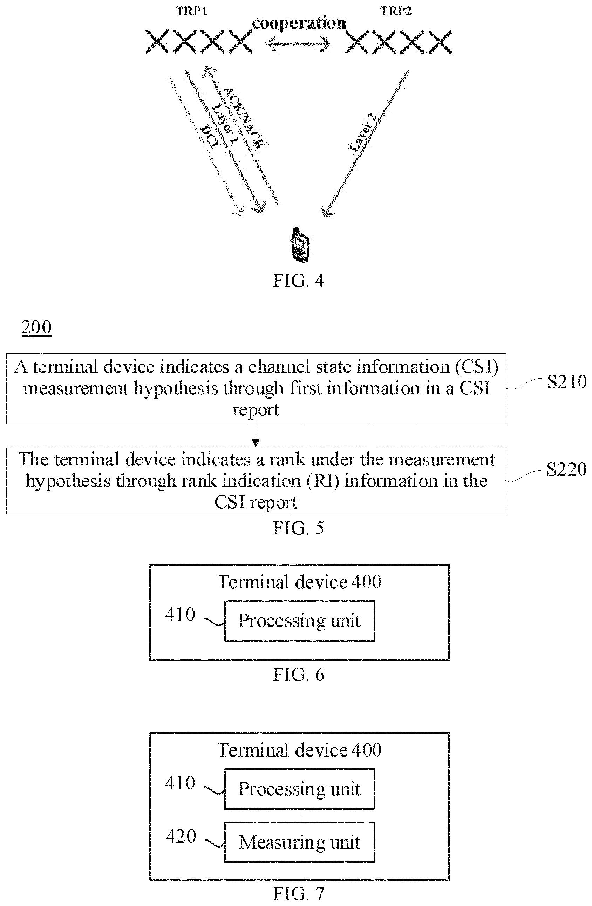

Referring to FIG. 4, for downlink transmission of multiple TRPs scheduled by a single PDCCH, the same DCI can schedule multiple transmission layers from different TRPs. The transmission layers from different TRPs employ Demodulation Reference Signal (DMRS) ports in different Code Division Multiplexing (CDM) groups, and employ different Transmission Configuration Indicator (TCI) states. The network device needs to indicate the DMRS ports from different CDM groups and the respective TCI states corresponding to the different CDM groups in one DCI, so as to support transmission using different beams for different DMRS ports. In this case, Hybrid Automatic Repeat reQuest (HARQ)-ACK feedback can reuse the mechanism in the related protocol. This scheme can only be used in the ideal backhaul scenarios. Moreover, in this case, the terminal needs to feed back the respective RI and PMI corresponding to different TRPs and a joint CQI (used to determine a Modulation and Coding Scheme (MCS)) in one CSI.

2. Downlink CSI reporting

In order for the network device to perform reasonable scheduling, the terminal needs to feed back the downlink CSI, so that the base station can determine the scheduling information of the terminal such as the number of transmission layers, the precoding matrix, the transmission beam, and the modulation and coding scheme. Specifically, the terminal performs CSI reporting based on the CSI reporting configuration indicated by the network device. Both the uplink resource used for CSI feedback by the terminal and the downlink reference signal used for CSI measurement by the terminal can be indicated through the CSI reporting configuration. Each CSI reporting configuration corresponds to a CSI report, and each CSI report may include Channel State Information Reference Signal Resource Indicator (CRI), RI, PMI, CQI or other different information. Specifically, what content/information is included in the CSI is determined by reportQuantity information in the CSI reporting configuration. For example, the reportQuantity information may indicate one of the following report quantities:

reportQuantity                                    CHOICE {

    none                                          NULL,

    cri-RI-PMI-CQI                               NULL,

    cri-RI-i1                                     NULL,

    cri-RI-i1-CQI                                SEQUENCE {

        pdsch-BundleSizeForCSI                          ENUMERATED  {n2,  n4}

OPTIONAL      -- Need S

      },

      cri-RI-CQI                          NULL,

      cri-RSRP                            NULL,

      ssb-Index-RSRP                      NULL,

      cri-RI-LI-PMI-CQI                   NULL

    },

wherein:
CRI is used to determine a Channel State Information Reference Signal (CSI-RS) resource currently used for channel measurement and an Interference Measurement Resource (IMR) currently used for interference measurement from among multiple CSI-RS resources.

RI is used to feed back the recommended number of transmission layers (Rank).

PMI is used to determine the recommended precoding matrix from a predefined codebook.

The CQI is used to feed back the current channel quality, which can be determined based on a Signal to Interference plus Noise Ratio (SINR) estimated by the terminal. The channel part in the SINR is determined based on a non-zero power CSI-RS configured by the network for the channel measurement, and the interference part is determined based on Channel State Information Interference Measurement (CSI-IM) or non-zero power CSI-RS configured by the network for the interference measurement. The CQI is calculated based on the fed back RI and PMI.

RSRP (Reference Signal Receiving Power) is used to report the RSRP of a Synchronization Signal and Physical Broadcast Channel (PBCH) block (SSB) or CSI-RS corresponding to the index being fed back, so as to be used by the network side to determine the beam used for the downlink transmission.

LI (layer index) is used to indicate the index of the transmission layer associated with a Phase Tracking Reference Signal (PTRS).

When a CSI carries a large number of bits, one CSI may be divided into two parts in order to prioritize transmission of important CSI information. For different types of codebooks, the information included in CSI part 1 and part 2 is as shown in the table below. The number of bits in CSI part 1 is fixed and is used to carry a small amount of important information such as RI and CQI; and the number of bits in CSI part 2 is determined based on CSI part 1 and is used to carry information with a large number of bits such as PMI. When the code rate of a Physical Uplink Shared Channel (PUSCH)/Physical Uplink Control Channel (PUCCH) carrying the CSI exceeds a certain value, the terminal needs to drop some information in CSI part 2 to ensure the transmission performance of the PUSCH/PUCCH, so that at least the code rate is within a reasonable range. Specifically, the information in CSI part 1 will not be dropped, and the CSI with a lower priority in the CSI part 2 is dropped first according to the priority of the CSI report. The priority of the CSI report is determined according to the periodicity of the CSI, the content of the CSI report, the carrier corresponding to the CSI report, and an ID configured for the CSI report.

| Codebook type | CSI Part 1 | CSI Part 2 |
|---|---|---|
| Type I codebook | RI, CRI, CQI for 1st CW | PMI, CQI for 2nd CW (RI>4) |
| Type II codebook | RI, CQI, Number of non-zero wideband amplitude coefficient per layer (separately encoded) | PMI |

In related technologies, in order to measure the CSI of multiple coordinated TRPs, the network device may configure two Channel Measurement Resource (CMR) sets for the terminal, and each set is used to measure the CSI of one TRP. The terminal performs measurements based on the two configured CMR sets to determine whether the current best CSI is obtained from the measurement based on a single TRP (that is, a single CMR set or a single CMR) or from the measurement based on multiple TRPs (that is, two CMR sets or two CMRs). The former corresponds to the measurement hypothesis of a single TRP, and the latter corresponds to the measurement hypothesis of Non-Coherent Joint Transmission (NC-JT). The terminal may feed back in the CSI which one is the currently recommended measurement hypothesis, and the corresponding CSI under the measurement hypothesis, such as CRI, RI, PMI, and CQI. At present, it is necessary to consider how to feed back the recommended measurement hypothesis with the minimum signaling overhead, and how to determine the CRI and RI information under the measurement hypothesis.

FIG. 5 is a schematic flowchart of an information processing method 200 according to an embodiment of the present disclosure. The method can optionally be applied to the system as shown in FIG. 1, but it is not limited thereto. The method includes at least some of the following contents.

In S210, a terminal device indicates a channel state information (CSI) measurement hypothesis through first information in a CSI report.

In S220, the terminal device indicates a rank under the measurement hypothesis through rank indication (RI) information in the CSI report.

Exemplarily, the rank in the CSI report may be the number of transmission layers recommended by the terminal device. The terminal device indicates (also referred to as reporting or feeding back) the CSI measurement hypothesis to the network device through the first information in the CSI report. The terminal device indicates (also referred to as reporting or feeding back) to the network device the number of transmission layers recommended by the terminal device under the measurement hypothesis through the RI information in the CSI report.

Optionally, the method further includes performing CSI measurement by the terminal device according to two channel measurement resource (CMR) sets configured by a network device.

Optionally, the two CMR sets are included in a non-zero power channel state information reference signal (CSI-RS) resource set used for channel measurement.

Prior to S210, the terminal device may receive a non-zero power CSI-RS resource set for the channel measurement, and the set may include two CMR sets. The terminal device can perform CSI measurement according to the two CMR sets configured by the network device. Then, in S210, the terminal device may feed back the CSI report to the network device, and indicate the CSI measurement hypothesis through the first information in the CSI report. In addition, in S220, the terminal device may also indicate the number of transmission layers (Rank) recommended by the terminal device under the measurement hypothesis through the RI information in the CSI report.

Optionally, the measurement hypothesis is the CMR or the number of CMRs on which the CSI measurement is based.

In an embodiment of the present disclosure, the measurement hypothesis is that the CSI measurement is based on a single CMR, which may also be referred to as the measurement hypothesis that the CSI measurement is based on a single TRP transmission. The measurement hypothesis is that the CSI measurement is based on multiple CMRs, which may also be referred to as the measurement hypothesis that the CSI measurement is based on NC-JT transmission.

Optionally, the first information is channel state information reference signal resource indication (CRI) information, RI information or measurement hypothesis information in the CSI report.

Optionally, the terminal device indicates the CSI measurement hypothesis through the first information in the CSI report, including: when the first information is the CRI information, the CRI information indicates one or two CMRs in the two CMR sets used for the CSI measurement, as the CSI measurement hypothesis. For example, the terminal device indicates, through the CRI information in the CSI report, one or two CMRs in the two CMR sets used for the CSI measurement, as the CSI measurement hypothesis.

Optionally, when the first information is the CRI information, the number of bits of the CRI information is $\log_2$ (K+N), where K is the total number of CMRs included in the two CMR sets used for the CSI measurement, and N is the number of CMR combinations used for NC-JT measurement in the two CMR sets used for the CSI measurements.

In an embodiment of the present disclosure, K may be a positive integer greater than or equal to 2, and N may be a positive integer greater than or equal to 1. The two CMR sets can include a total of K resources (not limited to 2), each CMR set can include one or more resources (not limited to 2), and each CMR combination includes two CMRs, including a pair of CMRs from the two CMR sets, respectively.

Optionally, the terminal device indicates the CSI measurement hypothesis through the first information in the CSI report, including: when the first information is the RI information, different values of the rank or the numbers of ranks indicated by the RI information correspond to different measurement hypotheses.

Optionally, in the case where the first information is the RI information, it may include at least one of the following processing manners:

Manner 1. The RI information indicates one or two ranks;

in the case where the RI information indicates one rank, the CSI is based on the measurement hypothesis of the single CMR; and/or
in the case where the RI information indicates two ranks, the CSI is based on the measurement hypothesis of two CMRs.

For example, in the case where the RI information in the CSI report indicates one rank, the terminal device indicates, through the RI information, a single CMR used for the CSI measurement, as the CSI measurement hypothesis. In the case where the RI information in the CSI report indicates two ranks, the terminal device indicates, through the RI information, two CMRs used for the CSI measurement, as the CSI measurement hypothesis.

Manner 2: The RI information indicates two ranks;

in the case where one of the two ranks indicated by the RI information is zero, the CSI is based on the measurement hypothesis of a single CMR; and/or
in the case where the two ranks indicated by the RI information are both greater than zero, the CSI is based on the measurement hypothesis of two CMRs.

For example, in the case where one of the two ranks indicated by the RI information in the CSI report has a value of zero, the terminal device indicates a single CMR used for the CSI measurement as the CSI measurement hypothesis through the RI information. In the case where the two ranks indicated by the RI information in the CSI report are both greater than zero, the terminal device indicates two CMRs used for the CSI measurement as the CSI measurement hypothesis through the RI information.

Optionally, when the first information is the RI information, the number of bits of the CRI information included in the CSI report is at least one of the following:

$$\mathrm{Log}_2(K);$$

$$\mathrm{Log}_2(\max(K,N));$$

$$\mathrm{Log}_2(K/2);$$

and

$$Log_2(max(K/2,N));$$

where K is the total number of CMRs included in the two CMR sets used for the CSI measurement, and N is the number of CMR combinations used for the NC-JT measurement in the two CMR sets used for the CSI measurement.

Optionally, the terminal device indicates the CSI measurement hypothesis through the first information in the CSI report, including: when the first information is measurement hypothesis information, different values of the measurement hypothesis information correspond to a single-CMR based measurement hypothesis and a two-CMR based measurement hypothesis, respectively, or different values of the measurement hypothesis information correspond to a single-TRP based measurement hypothesis and a NC-JT based measurement hypothesis, respectively.

For example, the value of the measurement hypothesis information in the CSI report is 1 or 0. When the value of the measurement hypothesis information is 1, the terminal device indicates a single CMR used for the CSI measurement as the CSI measurement hypothesis through the measurement hypothesis information. When the value of the measurement hypothesis information is 0, the terminal device indicates two CMRs used for the CSI measurement as the CSI measurement hypothesis through the measurement hypothesis information.

For another example, the value of the measurement hypothesis information in the CSI report is 1 or 0. When the value of the measurement hypothesis information is 1, the terminal device indicates the single-TRP based measurement hypothesis through the measurement hypothesis information. When the value of the measurement hypothesis information is 0, the terminal device indicates the NC-JT-based measurement hypothesis through the measurement hypothesis information.

Optionally, when the first information is the measurement hypothesis information, the number of bits of the CRI information included in the CSI report is $log_2(max(K,N))$, where K is the total number of CMRs included in the two CMR sets used for the CSI measurement, and N is the number of CMR combinations used for NC-JT measurement in the two CMR sets used for the CSI measurement.

Optionally, S220 may include at least one of the following manners.

Manner 1: The RI information includes two RIs, and the number of bits of a first RI in the two RIs is greater than the number of bits of a second RI.

Optionally, in manner 1, in the case where the measurement hypothesis is that the CSI measurement is based on a single CMR, the first RI is obtained from the measurement based on the single CMR, and the second RI does not indicate a rank value; and/or

in the case where the measurement hypothesis is that the CSI measurement is based on two CMRs, the first RI and the second RI are respectively obtained from the measurements based on the two CMRs.

Optionally, in manner 1, the rank indicated by the first RI is not greater than the maximum rank that can be indicated by the second RI.

Manner 2: The RI information includes one RI, and the RI is used to indicate one rank or two ranks.

Optionally, in manner 2, in the case where the measurement hypothesis is that the CSI measurement is based on a single CMR, the RI is used to indicate one rank, the rank is obtained from the measurement based on the single CMR, and the single CMR is indicated by the CRI information in the CSR report. For example, the value of the rank may be 1-8.

Optionally, in manner 2, in the case where the measurement hypothesis is that the CSI measurement is based on two CMRs, the RI is used to indicate a combination of two ranks, the two ranks are respectively obtained from the measurements based on the two CMRs, and the two CMRs are indicated by the CRI information in the CSI report.

Optionally, in manner 2, the number of bits of the CRI information in the CSI report is $log_2(max(K,N))$ or $log_2(K+N)$, where K is the total number of CMRs included in the two CMR sets used for the CSI measurement, and N is the number of CMR combinations used for NC-JT measurement in the two CMR sets used for the CSI measurement.

Manner 3: The RI information includes one RI, and the RI is used to indicate a combination of a first rank and a second rank.

Optionally, in manner 3, a value range of the RI includes:

the first rank indicated by a first value range of the RI is greater than 0, and the second rank indicated by the first value range of the RI is equal to 0;
the first rank indicated by a second value range of the RI is equal to 0, and the second rank indicated by the second value range of the RI is greater than 0;
both the first rank and the second rank indicated by a third value range of the RI are greater than 0.

Optionally, in manner 3, in the case where the first rank is greater than 0 and the second rank is equal to 0, the CSI is obtained from the measurement based on the first CMR, and the first CMR is a CMR corresponding to the CRI information in a first CMR set of the two CMR sets. For example, when the first rank is greater than 0 and the second rank is equal to 0, the CSI is obtained from the measurement based on the first CMR, and the first CMR is the CMR corresponding to the CRI information in the first CMR set of the two CMR sets.

Optionally, in manner 3, in the case where both the first rank and the second rank are greater than 0, the first rank and the second rank are respectively obtained from the measurements based on the first CMR and the second CMR, and the first CMR and the second CMR are respectively CMRs corresponding to the CRI information in the two CMR sets.

Optionally, in manner 3, the number of bits of the CRI information is $\log_2(K/2)$ or $\log_2(\max(K/2,N))$, where K is the total number of CMRs included in the two CMR sets used for the CSI measurement, and N is the number of CMR combinations used for NC-JT measurement in the two CMR sets used for the CSI measurement.

Manner 4: The RI information includes one RI, and the RI is used to indicate one rank or two ranks.

Optionally, in manner 4, a first value range of the RI indicates one rank, and a second value range of the RI indicates two ranks.

Optionally, in manner 4, in the case where the RI indicates one rank, the rank is obtained from the measurement based on the third CMR, and the third CMR is the CMR corresponding to the CRI information in the K CMRs of the two CMR sets.

Optionally, in manner 4, in the case where the RI indicates two ranks, the two ranks are respectively obtained from the measurement based on the third CMR and the fourth CMR, and the third CMR and the fourth CMR are a CMR combination corresponding to the CRI information in the N CMR combinations used for NC-JT measurement in the two CMR sets.

Optionally, in manner 4, the number of bits of the CRI information is $\log_2(K)$ or $\log_2(K/2)$ or $\log_2(\max(K,N))$, where K is the total number of CMRs included in the two CMR sets used for the CSI measurement, and N is the number of CMR combinations used for NC-JT measurements in the two CMR sets used for the CSI measurement.

In the embodiments of the present disclosure, the terminal device can feed back the recommended measurement hypothesis and one or two RIs under the corresponding measurement hypothesis based on multiple CMR sets, so that the network side can obtain the best transmission scheme and corresponding RIs under the current CMR configuration, to improve the throughput of downlink transmission.

In a specific application example, the information processing method of the present disclosure may be a CSI reporting method. The terminal performs CSI measurement based on the two CMR sets, so as to feed back the CSI measurement hypothesis through the first information in the CSI report, and feed back the RI under the measurement hypothesis through the RI information in the CSI report. Specifically, the embodiments of the present disclosure may provide multiple different methods for reporting the measurement hypothesis and RI information. According to the method in an embodiment of the present disclosure, the terminal may feed back the recommended measurement hypothesis and one or two RIs under the corresponding measurement hypothesis based on multiple CMR sets. Accordingly, the network side can obtain the best transmission scheme and corresponding RI under the current CMR configuration, to improve the throughput of the downlink transmission. The following are a few specific examples.

Example 1:

S11. The terminal receives a set of non-zero power CSI-RS resources (i.e., CMRs) configured by the network device for channel measurement, and the set includes two CMR sets.

Specifically, the set includes K non-zero power CSI-RS resources, which can be divided into two CMR sets each of which has a size of K/2. In another implementation, the numbers of CMRs included in the two CMR sets may be different, and the CMRs included in each set are configured for the terminal by the network device through high-layer signaling.

In addition, the network device may configure N CMR combinations for NC-JT measurement through high-layer signaling, and each combination includes two CMRs from the two CMR sets. For example, a CMR combination includes CMR1 and CMR2, CMR1 is from one CMR set, and CMR2 is from the other CMR set.

S12. The terminal performs CSI measurement based on the two CMR sets.

Specifically, the terminal may perform single-TRP CSI measurement based on the K CMR resources included in the two CMR sets, respectively, that is, each CSI measurement is based only on a single CMR. The terminal may also perform multi-TRP CSI measurement based on the N CMR combinations used for NC-JT measurement, that is, each CSI measurement is performed based on one CMR combination (two CMRs).

The terminal can determine the better CSI measurement hypothesis from the best CSI obtained from the measurement based on the single CMR and the best CSI obtained from the measurement based on the CMR combination (two CMRs), and feed back the measurement hypothesis and the corresponding CSI to the network device through the CSI report.

S13. The terminal feeds back the CSI measurement hypothesis through the first information in the CSI report.

Specifically, the measurement hypothesis is the CMR(s) on which the CSI measurement is based, or the number of the CMRs on which the CSI measurement is based. In an embodiment of the present disclosure, the measurement hypothesis is that the CSI measurement is based on a single CMR, which may also be referred to as the measurement hypothesis that the CSI measurement is based on a single TRP transmission. The measurement hypothesis is that the CSI measurement is based on multiple CMRs, which may also be referred to as the measurement hypothesis that the CSI measurement is based on NC-JT transmission.

In an implementation, the first information is CRI information in the CSI report. The CRI information indicates one or two CMRs in the two CMR sets. In this case, the CMR(s) indicated by the CRI information is the CSI measurement hypothesis, that is, the CMR(s) on which the CSI measurement is based.

For example, the number of bits of the CRI information is $\log_2(K+N)$, where K is the total number of CMRs included in the two CMR sets (that is, the number of non-zero power CSI-RS resource sets used for channel measurement), N is the number of CMR combinations used for NC-JT measurement in the two CMR sets, and the CMR combinations used for NC-JT measurement can be configured for the terminal by the network device through high-layer signaling. In this way, the CRI information may indicate one of the K CMRs (corresponding to the measurement hypothesis based on a single CMR), or one of the N CMR combinations (corresponding to the measurement hypothesis based on two CMRs).

In another implementation, the first information is measurement hypothesis information in the CSI report. The different values of the measurement hypothesis information respectively correspond to the single-CMR based measurement hypothesis and the two-CMR based measurement hypothesis, or the single-TRP based measurement hypothesis and the NC-JT based measurement hypothesis.

For example, the measurement hypothesis information includes 1-bit information, where 0 indicates the single-CMR based measurement hypothesis or the single TRP-based measurement hypothesis, and 1 indicates the two-CMR based measurement hypothesis or the NC-JT based measurement hypothesis.

For another example, in this case the number of bits of the CRI information included in the CSI is $\log_2(\max(K,N))$, where K is the total number of CMRs included in the two CMR sets, and N is the number of CMR combinations used for NC-JT measurement in the two CMR sets. In this way, when the measurement hypothesis information indicates the single-CMR based measurement hypothesis, the CRI information can indicate one CMR of the K CMRs; and when the measurement hypothesis information indicates the two-CMR based measurement hypothesis, the CRI information can indicate one CMR combination of the N CMR combinations.

S14. The terminal feeds back a rank under the measurement hypothesis through RI information in the CSI report.

Specifically, the RI information includes two RIs (that is, two independent RI indication fields), and the number of bits of a first RI (indication field) of the two RIs is greater than the number of bits of a second RI (indication field).

In an implementation, the first RI includes 3 bits and is used to indicate one of Rank={1,2,...,8}; and the second RI includes 2 bits and is used to indicate one of Rank={1,2,...,4}. In another implementation, the first RI includes 2 bits and is used to indicate one of Rank={1,2,3,4}; and the second RI includes 1 bit and is used to indicate one of Rank={1,2}.

In an implementation, when the measurement hypothesis is that the CSI measurement is based on a single CMR, the first RI is obtained from the measurement based on the single CMR, and the second RI does not indicate a rank. The single CMR is the CMR indicated by the CRI information in the CSI report. In this case, the first RI is a valid RI and can be used for downlink transmission of the single TRP; and the bit number of the second RI is not used to indicate a rank, and can be reserved or used for other purposes.

In another implementation, when the measurement hypothesis is that the CSI measurement is based on two CMRs, the first RI and the second RI are respectively obtained from the measurement based on the two CMRs. The two CMRs are a CMR combination indicated by the CRI information in the CSI report. In this case, the two RIs are both valid RIs, which are respectively used for downlink transmission of different TRPs.

In this case, the rank indicated by the first RI is not greater than the maximum rank that can be indicated by the second RI. For example, if the first RI is 3 bits, and the second RI is 2 bits and indicates the rank value of {1,2,3,4}, the rank value indicated by the first RI cannot exceed 4 and can only be one of 1-4, and it cannot indicate Rank=5-8.

With the method of this example, the flexibility of rank indication can be guaranteed, and flexible combinations of various rank values can be fed back under different measurement hypotheses.

Example 2:

S21. The terminal receives a set of non-zero power CSI-RS resources (i.e., CMRs) configured by the network device for channel measurement, and the set includes two CMR sets.

Specifically, the set includes K non-zero power CSI-RS resources, which can be divided into two CMR sets each of which has a size of K/2. In another implementation, the numbers of CMRs included in the two CMR sets may be different, and the CMRs included in each set are configured for the terminal by the network device through high-layer signaling.

In addition, the network device may configure N CMR combinations for NC-JT measurement through high-layer signaling, and each combination includes two CMRs from the two CMR sets. For example, a CMR combination includes CMR1 and CMR2, CMR1 is from one CMR set, and CMR2 is from the other CMR set.

S22. The terminal performs CSI measurement based on the two CMR sets.

Reference can be made to the contents in Example 1 for details, which will not be repeated here.

S23. The terminal feeds back the CSI measurement hypothesis through the first information in the CSI report.

Specifically, the measurement hypothesis is the CMR on which the CSI measurement is based, or the number of the CMRs on which the CSI measurement is based.

According to the present invention, the first information is CRI information in the CSI report. The CRI information indicates one or two CMRs in the two CMR sets. In this case, the CMR(s) indicated by the CRI information is the CSI measurement hypothesis, that is, the CMR(s) on which the CSI measurement is based. Reference can be made to the description in Example 1 for details.

In another implementation, the first information is measurement hypothesis information in the CSI report. The different values of the measurement hypothesis information respectively correspond to a single-CMR based measurement hypothesis and a two-CMR based measurement hypothesis, or a single-TRP based measurement hypothesis and a NC-JT based measurement hypothesis. Reference can be made to the description in Example 1 for details.

S24. The terminal feeds back a rank under the measurement hypothesis through RI information in the CSI report.

Specifically, the RI information includes an RI, which is used to indicate one or two ranks, and different values of the RI indicate the same number of ranks (one or two).

When the measurement hypothesis is that the CSI measurement is based on a single CMR (that is, the single-TRP based measurement hypothesis), the RI is used to indicate one rank, which is obtained from the measurement based on the single CMR, and the single CMR is indicated through the CRI information in the CSI report.

Specifically, the rank indicated by the RI is one of {1,2,...,8}.

When the measurement hypothesis is that the CSI measurement is based on two CMRs, the RI is used to indicate a combination of two ranks, the two ranks are respectively obtained from the measurement based on the two CMRs, and the two CMRs are indicated through the CRI information in the CSI report.

In an implementation, the RI is of 4 bits, and indicates the rank value as follows:

| RI value | Rank value under single-CMR measurement hypothesis | Rank value under two-CMR measurement hypothesis |
| --- | --- | --- |
| 1 | 1 | {1,1} |
| 2 | 2 | {1,2} |
| 3 | 3 | {2,1} |
| 4 | 4 | {2,2,} |
| 5 | 5 | {2,3} |
| 6 | 6 | {3,2} |
| 7 | 7 | {3,3} |
| 8 | 8 | {3,4} |
| 9 | Reserved | {4,3} |
| 10 | Reserved | {4,4} |
| 11-16 | Reserved | Reserved |

In an implementation, the RI is of 3bits, and indicates the rank value as follows:

| RI value | Rank value under single-CMR measurement hypothesis | Rank value under two-CMR measurement hypothesis |
| --- | --- | --- |
| 1 | 1 | {1,1} |
| 2 | 2 | {1,2} |
| 3 | 3 | {2,1} |
| 4 | 4 | {2,2} |
| 5 | 5 | Reserved |
| 6 | 6 | Reserved |
| 7 | 7 | Reserved |
| 8 | 8 | Reserved |

In an implementation, when the measurement hypothesis is indicated by separate measurement hypothesis information, the number of bits of the CRI information included in the CSI report is $\log_2(\max(K,N))$. When the measurement hypothesis information indicates the single-CMR based measurement hypothesis, the CRI information can indicate one CMR of the K CMRs; and when the measurement hypothesis information indicates the two-CMR based measurement hypothesis, the CRI information can indicate one CMR combination of the N CMR combinations.

In another implementation, when the measurement hypothesis is indicated by the CRI information, the number of bits of the CRI information in the CSI report is $\log_2(K+N)$. The CRI information may indicate one CMR of the K CMRs, or one CMR combination of the N CMR combinations.

With the method of this example, the rank values under different measurement hypotheses are indicated by reusing the same RI information field, which can reduce the number of information bits in the CSI report, thereby improving the performance of uplink control information (UCI) transmission.

Example 3:

S31. The terminal receives a set of non-zero power CSI-RS resources (i.e., CMRs) configured by the network device for channel measurement, and the set includes two CMR sets.

Specifically, the set includes K non-zero power CSI-RS resources, which can be divided into two CMR sets each of which has a size of K/2. In another implementation, the numbers of CMRs included in the two CMR sets may be different, and the CMRs included in each set are configured for the terminal by the network device through high-layer signaling.

In addition, the network device may configure N CMR combinations for NC-JT measurement through high-layer signaling, and each combination includes two CMRs from the two CMR sets. For example, a CMR combination includes CMR1 and CMR2, CMR1 is from one CMR set, and CMR2 is from the other CMR set.

S32. The terminal performs CSI measurement based on the two CMR sets.

Reference can be made to the contents in Example 1 for details, which will not be repeated here.

S33. The terminal feeds back the CSI measurement hypothesis through the first information in the CSI report.

Specifically, the measurement hypothesis is the CMR on which the CSI measurement is based, or the number of the CMRs on which the CSI measurement is based.

In an implementation, the first information is RI information, and different ranks indicated by the RI information correspond to different measurement hypotheses.

For example, the RI information indicates two ranks, when one of the ranks indicated by the RI information is zero, the CSI is based on a single-CMR measurement hypothesis; and when the two ranks indicated by the RI information are both greater than zero, the CSI is based on a two-CMR measurement hypothesis.

For example, in this case, the number of bits of the CRI information included in the CSI report is $\log_2(K/2)$ or $\log_2(\max(K/2,N))$.

S34. The terminal feeds back a rank under the measurement hypothesis through RI information in the CSI report.

Specifically, the RI information includes an RI, and the RI is used to indicate a combination of a first rank and a second rank. At least one of the first rank and the second rank has a value other than zero.

Specifically, one rank indicated by a part of the value range of the RI is greater than 0, and the other rank indicated by the part of the value range of the RI is equal to 0, which corresponds to the single-CMR based measurement hypothesis; and the two ranks indicated by the other part of the value range are both greater than zero, which corresponds to the two-CMR based measurement hypothesis.

For example, the first rank indicated by a first value range of the RI is greater than 0, and the second rank indicated by the first value range of the RI is equal to 0, which is used to indicate the transmission of the TRP corresponding to the first CMR set; the first rank indicated by a second value range of the RI is equal to 0, the second rank indicated by the second value range of the RI is greater than 0, which is used to indicate the transmission of the TRP corresponding to the second CMR set; and the first rank and the second rank indicated by a third value range of the RI are both greater than 0, which is used to indicate the NC-JT transmission of two TRPs .

Taking the RI information including 5 bits as an example, the RI may indicate the following states:

| RI value | Indicated rank value |
|---|---|
| 1 | {1,0} |
| 2 | {2,0} |
| 3 | {3,0} |
| 4 | {4,0} |
| 5 | {5,0} |

(continued)

| RI value | Indicated rank value |
| --- | --- |
| 6 | {6,0} |
| 7 | {7,0} |
| 8 | {8,0} |
| 9 | {0,1} |
| 10 | {0,2} |
| 11 | {0,3} |
| 12 | {0,4} |
| 13 | {0,5} |
| 14 | {0,6} |
| 15 | {0,7} |
| 16 | {0,8} |
| 17 | {1,1} |
| 18 | {1,2} |
| 19 | {2,1} |
| 20 | {2,2} |
| 21 | {2,3} |
| 22 | {3,2} |
| 23 | {3,3} |
| 24 | {3,4} |
| 25 | {4,3} |
| 26 | {4,4} |
| 27-32 | Reserved |

Taking the RI information including 4 bits as an example, the RI may indicate the following states:

| RI value | Indicated rank value |
| --- | --- |
| 1 | {1,0} |
| 2 | {2,0} |
| 3 | {3,0} |
| 4 | {4,0} |
| 5 | {0,1} |
| 6 | {0,2} |
| 7 | {0,3} |
| 8 | {0,4} |
| 9 | {1,1} |
| 10 | {1,2} |
| 11 | {2,1} |
| 12 | {2,2} |
| 13-16 | Reserved |

In an implementation, when the first rank is greater than 0 and the second rank is equal to 0, the CSI is obtained from the measurement based on the first CMR, and the first CMR is the CMR corresponding to the CRI information in a first CMR set of the two CMR sets. When the second rank is greater than 0 and the first rank is equal to 0, the CSI is obtained from the measurement based on the second CMR, and the second CMR is the CMR corresponding to the CRI information in a second CMR set of the two CMR sets. In this case, the effective number of bits of the CRI information is $\log_2(K/2)$, which is used to indicate a CMR in a CMR set corresponding to a non-zero rank.

In another implementation, when both the first rank and the second rank are greater than 0, the first rank and the second rank are respectively obtained from the measurement based on the first CMR and the second CMR, and the first CMR and the second CMR are respectively CMRs corresponding to the CRI information in the two CMR sets. In this case, the effective number of bits of the CRI information is $\log_2(K/2)$, which is used to indicate two CMRs respectively corresponding to the CRI information in the two CMR sets; or, the effective number of bits of the CRI information is $\log_2(\max(K/2,N))$, which is used to indicate one of the N CMR combinations for NC-JT measurement.

With the method of this example, the measurement hypothesis used is fed back through the rank combination indicated by the RI, which can reduce the number of bits of CRI information in the CSI report, and does not require additional measurement hypothesis information, thereby reducing the overall payload of CSI and improving transmission performance of UCI.

Example 4:

S41. The terminal receives a set of non-zero power CSI-RS resources (i.e., CMRs) configured by the network device for channel measurement, and the set includes two CMR sets.

Specifically, the set includes K non-zero power CSI-RS resources, which can be divided into two CMR sets each of which has a size of K/2. In another implementation, the numbers of CMRs included in the two CMR sets may be different, and the CMRs included in each set are configured for the terminal by the network device through high-layer signaling.

In addition, the network device may configure N CMR combinations for NC-JT measurement through high-layer signaling, and each combination includes two CMRs from the two CMR sets. For example, a CMR combination includes CMR1 and CMR2, CMR1 is from one CMR set, and CMR2 is from the other CMR set.

S42. The terminal performs CSI measurement based on the two CMR sets.

Reference can be made to the contents in Example 1 for details, which will not be repeated here.

S43. The terminal feeds back the CSI measurement hypothesis through the first information in the CSI report.

Specifically, the measurement hypothesis is the CMR on which the CSI measurement is based, or the number of the CMRs on which the CSI measurement is based.

In an implementation, the first information is RI information, and the numbers of ranks indicated by the RI information correspond to different measurement hypotheses.

For example, the RI information indicates one rank or two ranks. When the RI information indicates one rank, the CSI is based on a single-CMR measurement hypothesis; and when the RI information indicates two ranks, the CSI is based on a two-CMR measurement hypothesis.

For example, in this case, the number of bits of the CRI information included in the CSI report is $\log_2(K)$ or $\log_2(\max(K,N))$.

S44. The terminal feeds back a rank under the measurement hypothesis through RI information in the CSI report.

Specifically, the RI information includes one RI, and the RI is used to indicate one or two rank values.

In an implementation, a first value range of the RI indicates one rank, and a second value range of the RI indicates two ranks.

Taking the RI information including 5 bits as an example, the RI may indicate the following states:

| RI value | Indicated Rank value |
|---|---|
| 1 | {1} |
| 2 | {2} |
| 3 | {3} |
| 4 | {4} |
| 5 | {5} |
| 6 | {6} |
| 7 | {7} |
| 8 | {8} |

| 9 | {1,1} |
|---|---|
| 10 | {1,2} |
| 11 | {2,1} |
| 12 | {2,2} |
| 13 | {2,3} |
| 14 | {3,2} |
| 15 | {3,3} |
| 16 | {3,4} |
| 17 | {4,3} |
| 18 | {4,4} |
| 19-32 | Reserved |

Taking the RI information including 4 bits as an example, the RI may indicate the following states:

| RI value | Indicated Rank value |
|---|---|
| 1 | {1} |
| 2 | {2} |
| 3 | {3} |
| 4 | {4} |
| 5 | {1,1} |
| 6 | {1,2} |
| 7 | {2,1} |
| 8 | {2,2} |
| 9 | {2,3} |
| 10 | {3,2} |
| 11 | {3,3} |
| 12 | {3,4} |
| 13 | {4,3} |
| 14 | {4,4} |
| 15-16 | Reserved |

Taking the RI information including 3 bits as an example, the RI may indicate the following states:

| RI value | Indicated Rank value |
|---|---|
| 1 | {1} |
| 2 | {2} |
| 3 | {3} |
| 4 | {4} |
| 5 | {1,1} |
| 6 | {1,2} |
| 7 | {2,1} |

(continued)

| RI value | Indicated Rank value |
|---|---|
| 8 | {2,2} |

In the above tables, considering that the cell edge UE can only support a lower rank, the signaling overhead of the RI indication field can be further reduced by limiting the value range of the rank.

When the RI indicates one rank, the rank is obtained from the measurement based on a third CMR, and the third CMR is a CMR corresponding to the CRI information in the K CMRs of the two CMR sets (that is, the CMR resource set). In this case, the effective number of bits of the CRI information is $\log_2(K)$, which is used to indicate one CMR of the K CMRs.

When the RI indicates two ranks, the ranks are obtained from the measurement based on the third CMR and the fourth CMR, and the third and fourth CMRs are a CMR combination corresponding to the CRI information in the N CMR combinations used for NC-JT measurement in the two CMR sets. In this case, the effective number of bits of the CRI information is $\log_2(K)$ or $\log_2(K/2)$, which is used to indicate the two CMRs corresponding to the CRI information in the two CMR sets; or, the effective number of bits of the CRI information is $\log_2(\max(K,N))$, which is used to indicate one of the N CMR combinations for NC-JT measurement.

With the method of this example, the measurement hypothesis used is fed back through the number of ranks indicated by the RI, which can reduce the number of bits of CRI information in the CSI report, and does not require additional measurement hypothesis information, thereby reducing the overall payload of CSI and improving transmission performance of UCI.

According to the method in the embodiments of the present disclosure, the terminal can feed back the recommended measurement hypothesis and the values of one or two ranks under the corresponding measurement hypothesis based on multiple CMR sets, so that the network side can obtain the best transmission scheme and the corresponding RI under the current CMR configuration, which improves the throughput of downlink transmission. At the same time, in the embodiments of the present disclosure, the overhead of the information used to indicate the measurement hypothesis, RI and CRI in the CSI are taken into account, and the information is fed back with the minimum CSI overhead.

FIG. 6 is a schematic block diagram of a terminal device 400 according to an embodiment of the present disclosure. The terminal device 400 may include:

a processing unit 410, configured to indicate a channel state information (CSI) measurement hypothesis through first information in a CSI report; and indicate a rank under the measurement hypothesis through RI information in the CSI report.

Optionally, as shown in FIG. 7, the terminal device further includes:

a measurement unit 420, configured to perform CSI measurement according to two channel measurement resource (CMR) sets configured by the network device.

Optionally, a non-zero power channel state information reference signal (CSI-RS) resource set used for channel measurement includes the two CMR sets.

Optionally, the measurement hypothesis is the CMR or the number of CMRs on which the CSI measurement is based.

Optionally, the first information is channel state information reference signal resource indication (CRI) information, RI information or measurement hypothesis information in the CSI report.

Optionally, the processing unit is configured to indicate the CSI measurement hypothesis through the first information in the CSI report, including: in the case where the first information is the CRI information, the CRI information indicates one or two CMRs in the two CMR sets used for CSI measurement, as the CSI measurement hypothesis.

Optionally, in the case where the first information is the CRI information, the number of bits of the CRI information is $\log_2(K+N)$, where K is the total number of CMRs included in the two CMR sets used for the CSI measurement, and N is the number of CMR combinations used for NC-JT measurement in the two CMR sets used for the CSI measurement.

Optionally, the processing unit is configured to indicate the CSI measurement hypothesis through the first information in the CSI report, including: in the case where the first information is the RI information, different values of the rank or the number of ranks indicated by the RI information correspond to different measurement hypotheses.

Optionally, in the case where the first information is the RI information, the RI information indicates one or two ranks;

in the case where the RI information indicates one rank, the CSI is based on a single-CMR measurement hypothesis; and/or

in the case where the RI information indicates two ranks, the CSI is based on a two-CMR measurement hypothesis.

Optionally, the RI information indicates two ranks;

in the case where one of the two ranks indicated by the RI information is zero, the CSI is based on the single-CMR measurement hypothesis; and/or
in the case where the two ranks indicated by the RI information are both greater than zero, the CSI is based on the two-CMR measurement hypothesis.

Optionally, in the case where the first information is the RI information, the number of bits of the CRI information included in the CSI report is at least one of the following:

$$Log_2(K);$$

$$Log_2(max(K,N));$$

$$Log_2(K/2);$$

and

$$Log_2(max(K/2,N));$$

where K is the total number of CMRs included in the two CMR sets used for the CSI measurement, and N is the number of CMR combinations used for the NC-JT measurement in the two CMR sets used for the CSI measurement.

Optionally, the processing unit is configured to indicate the CSI measurement hypothesis through the first information in the CSI report, including: when the first information is measurement hypothesis information, different values of the measurement hypothesis information correspond to a single-CMR based measurement hypothesis and a two-CMR based measurement hypothesis, respectively, or different values of the measurement hypothesis information correspond to a single-TRP based measurement hypothesis and a NC-JT based measurement hypothesis, respectively.

Optionally, the number of bits of the CRI information in the CSI report is $log_2(max(K,N))$, where K is the total number of CMRs included in the two CMR sets used for the CSI measurement, and N is the number of CMR combinations used for NC-JT measurements in the two CMR sets used for the CSI measurement.

Optionally, indicating the rank under the measurement hypothesis through the RI information in the CSI report may include at least one of the following manners:

Manner 1: The RI information includes two RIs, and the number of bits of the first RI in the two RIs is greater than the number of bits of the second RI.

Optionally, in manner 1, in the case where the measurement hypothesis is that the CSI measurement is based on a single CMR, the first RI is obtained from measurement based on the single CMR, and the second RI does not indicate a rank value; and/or

in the case where the measurement hypothesis is that the CSI measurement is based on two CMRs, the first RI and the second RI are respectively obtained from the measurement based on the two CMRs.

Optionally, in manner 1, the rank indicated by the first RI is not greater than the maximum rank that can be indicated by the second RI.

Manner 2: The RI information includes one RI, and the RI is used to indicate one or two ranks.

Optionally, in manner 2, in the case where the measurement hypothesis is that the CSI measurement is based on a single CMR, the RI is used to indicate a rank, the rank is obtained from the measurement based on the single CMR, and the single CMR is indicated by CRI information in the CSR report.

Optionally, in manner 2, in the case where the measurement hypothesis is that the CSI measurement is based on two CMRs, the RI is used to indicate a combination of two ranks, the two ranks are respectively obtained from the measurement based on the two CMRs, and the two CMRs are indicated by the CRI information in the CSI report.

Optionally, in manner 2, the number of bits of the CRI information in the CSI report is $log_2(max(K,N))$ or $log_2(K+N)$, where K is the total number of CMRs included in the two CMR sets used for the CSI measurement, and N is the number of CMR combinations used for NC-JT measurement in the two CMR sets used for the CSI measurement.

Manner 3: The RI information includes one RI, and the RI is used to indicate a combination of a first rank and a second rank.

Optionally, in manner 3, a value range of the RI includes:

the first rank indicated by a first value range of the RI is greater than 0, and the second rank indicated by the first value range of the RI is equal to 0;

the first rank indicated by a second value range of the RI is equal to 0, and the second rank indicated by the second value range of the RI is greater than 0;

both the first rank and the second rank indicated by a third value range of the RI are greater than 0.

Optionally, in manner 3, in the case where the first rank is greater than 0 and the second rank is equal to 0, the CSI is obtained from the measurement based on the first CMR, and the first CMR is a CMR corresponding to the CRI information in a first CMR set of the two CMR sets.

Optionally, in manner 3, in the case where both the first rank and the second rank are greater than 0, the first rank and the second rank are respectively obtained from the measurement based on the first CMR and the second CMR, and the first CMR and the second CMR are respectively CMRs corresponding to the CRI information in the two CMR sets.

Optionally, in manner 3, the number of bits of the CRI information is $\log_2(K/2)$ or $\log_2(\max(K/2,N))$, where K is the total number of CMRs included in the two CMR sets used for the CSI measurement, and N is the number of CMR combinations used for NC-JT measurement in the two CMR sets used for the CSI measurement.

Manner 4: The RI information includes one RI, and the RI is used to indicate one or two ranks.

Optionally, in manner 4, a first value range of the RI indicates one rank, and a second value range of the RI indicates two ranks.

Optionally, in manner 4, when the RI indicates one rank, the rank is obtained from the measurement based on a third CMR, and the third CMR is a CMR corresponding to the CRI information in the K CMRs of the two CMR sets.

Optionally, in manner 4, when the RI indicates two ranks, the two ranks are respectively obtained from the measurement based on a third CMR and a fourth CMR, and the third CMR and the fourth CMR are a CMR combination corresponding to the CRI information in the N CMR combinations used for NC-JT measurement in the two CMR sets.

Optionally, in manner 4, the number of bits of the CRI information is $\log_2(K)$ or $\log_2(K/2)$ or $\log_2(\max(K,N))$, where K is the total number of CMRs included in the two CMR sets used for the CSI measurement, and N is the number of CMR combinations used for NC-JT measurement in the two CMR sets used for the CSI measurement.

The terminal device 400 in the embodiment of the present disclosure can implement the corresponding functions of the terminal device in the foregoing method embodiments. For the processes, functions, implementations and beneficial effects corresponding to each module (sub-module, unit or component, etc.) in the terminal device 400, reference can be made to the corresponding descriptions in the above method embodiments, and details will not be repeated here. It should be noted that the functions described in respect to various modules (sub-modules, units or components, etc.) in the terminal device 400 of the embodiment of the present disclosure can be realized by different modules (sub-modules, units or components, etc.), or by the same module (sub-module, unit or component, etc.).

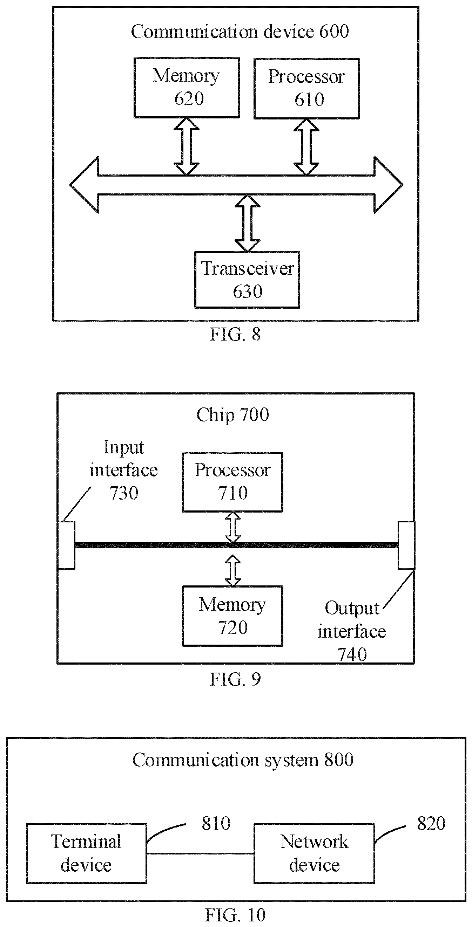

FIG. 8 is a schematic structural diagram of a communication device 600 according to an embodiment of the present disclosure. The communication device 600 includes a processor 610, and the processor 610 can call and run a computer program from a memory, to cause the communication device 600 to carry out the methods in the embodiments of the present disclosure.

Optionally, the communication device 600 may further include a memory 620. The processor 610 may call and run a computer program from the memory 620, to cause the communication device 600 to implement the methods in the embodiments of the present disclosure. The memory 620 may be a separate device independent of the processor 610, or may be integrated in the processor 610.

Optionally, the communication device 600 may further include a transceiver 630, and the processor 610 may control the transceiver 630 to communicate with other devices, and specifically, to send information or data to other devices or receive information or data sent by other devices. The transceiver 630 may include a transmitter and a receiver. The transceiver 630 may further include an antenna, and the number of the antennas may be one or more.

Optionally, the communication device 600 can be the network device in the embodiments of the present disclosure, and the communication device 600 can carry out the corresponding processes which are implemented by the network device in the methods of the embodiments of the present disclosure, which will not be repeated here for the sake of brevity.

Optionally, the communication device 600 can be the terminal device in the embodiments of the present disclosure, and the communication device 600 can carry out the corresponding processes which are implemented by the terminal device in the methods of the embodiments of the present disclosure, which will not be repeated here for the sake of brevity.

FIG. 9 is a schematic structural diagram of a chip 700 according to an embodiment of the present disclosure. The chip 700 includes a processor 710 which can call and run a computer program from a memory to implement the methods in the embodiments of the present disclosure.

Optionally, the chip 700 may further include a memory 720. The processor 710 may call and run a computer program from the memory 720 to implement the methods performed by the terminal device or the network device in the embodiments of the present disclosure.

The memory 720 can be a separate device independent of the processor 710, or can be integrated in the processor 710.

Optionally, the chip 700 can further include an input interface 730. The processor 710 can control the input interface 730 to communicate with other devices or chips, and specifically, to obtain information or data transmitted by other devices or chips.

Optionally, the chip 700 can further include an output interface 740. The processor 710 can control the output interface 740 to communicate with other devices or chips, and specifically, to output information or data to other devices or chips.

Optionally, the chip can be applied to the network device in the embodiments of the present disclosure, and the chip can carry out the corresponding processes which are implemented by the network device in the methods of the embodiments of the present disclosure, which will not be repeated here for the sake of brevity.

Optionally, the chip can be applied to the terminal device in the embodiments of the present disclosure, and the chip can carry out the corresponding processes which are implemented by the terminal device in the methods of the embodiments of the present disclosure, which will not be repeated here for the sake of brevity.

The chip applied to the network device and the chip applied to the terminal device can be the same chip or different chips.

It should be understood that the chip mentioned in the embodiments of the present disclosure can also be referred to as a system-level chip, a system chip, a chip system, or a system-on-chip.

The processor mentioned above may be a general-purpose processor, a digital signal processor (DSP), a field programmable gate array (FPGA), an application specific integrated circuit (ASIC) or other programmable logic devices, transistor logic devices, discrete hardware components, etc. The general-purpose processor mentioned above may be a microprocessor or any conventional processor.

The memory mentioned above may be either volatile memory or non-volatile memory, or may include both volatile and non-volatile memories. The non-volatile memory may be a read-only memory (ROM), a programmable read-only memory (PROM), an erasable programmable read-only memory (EPROM), an electrically programmable erase programmable read-only memory (electrically EPROM, EEPROM) or a flash memory. The volatile memory may be a random access memory (RAM).

It should be understood that the foregoing description of the memory is exemplary rather than limiting. For example, the memory in the embodiments of the present disclosure can also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), a Direct Rambus RAM (DR RAM), among others. That is to say, the memory in the embodiments of the present disclosure is intended to include but is not limited to these and any other suitable types of memories.

FIG. 10 is a schematic block diagram of a communication system 800 according to an embodiment of the present disclosure. The communication system 800 includes a terminal device 810 and a network device 820. The terminal device 810 is configured to indicate a CSI measurement hypothesis through first information in a CSI report; and indicate a rank under the measurement hypothesis through RI information in the CSI report. Optionally, the network device 820 is configured to configure non-zero power CSI-RS resources for channel measurement.

The terminal device 810 can be configured to implement the corresponding functions implemented by the terminal device in the above methods, and the network device 820 can be configured to implement the corresponding functions implemented by the network device in the above methods, which will not be repeated here for the sake of brevity.

The above embodiments may be implemented entirely or partly by software, hardware, firmware or any combination thereof. When implemented by software, it can be implemented entirely or partly in the form of a computer program product. The computer program product includes one or more computer instructions. When the computer program instructions are loaded and executed on the computer, the processes or functions in accordance with the embodiments of the present disclosure are entirely or partly generated. The computer can be a general-purpose computer, a dedicated computer, a computer network, or other programmable devices. The computer instructions can be stored in a computer-readable storage medium, or transmitted from one computer-readable storage medium to another. For example, the computer instructions can be transmitted from a website, a computer, a server, or a data center to another website, computer, server or data center in a wired manner such as through a coaxial cable, an optical fiber or a digital subscriber line (DSL) or in a wireless manner such as an infrared, wireless, microwave manner or the like. The computer-readable storage medium may be any available medium that can be accessed by a computer or a data storage device such as a server or data center integrated with one or more available media. The available medium may be a magnetic medium (such as a floppy disk, a hard disk, a magnetic tape), an optical medium (such as a DVD), or a semiconductor medium (such as a solid state disk (SSD)).

It should be understood that in the embodiments of the present disclosure, the sequence numbers of the above-mentioned processes do not mean the performing order, and the performing order of the processes should be determined according to the functions and the internal logic thereof, and should not compose any limitation on the implementations of the embodiments of the present disclosure.

Those skilled in the art can clearly understand that for convenience and conciseness of the description, for the specific operating process of the systems, devices and units described above, reference can be made to corresponding processes in the foregoing method embodiments, which will not be repeated here.

Those described above are only specific implementations of the present disclosure, and the protection scope of the present disclosure is not limited thereto. The protection scope of the present disclosure shall be subject to the protection scope of the claims.

**Claims**

1. An information processing method, comprising:

   performing, by a terminal device, channel state information, CSI, measurement based on two channel measurement resource, CMR, sets configured by a network device, wherein the two CMR sets are comprised in a non-zero power channel state information reference signal, CSI-RS, resource set used for channel measurement, and the CMRs in the two CMR sets are different;
   indicating (S210), by the terminal device, a CSI measurement hypothesis through first information in a CSI report; and
   indicating (S220), by the terminal device, a rank under the measurement hypothesis through rank indication, RI, information in the CSI report,
   wherein the RI information comprises one RI, and the RI is used to indicate one rank or two ranks,
   when the measurement hypothesis is that the CSI measurement is based on a single CMR, the RI is used to indicate one rank, the rank is obtained from measurement based on the single CMR, and the single CMR is indicated from the two CMR sets by channel state information reference signal resource indication, CRI, information in the CSI report,
   when the measurement hypothesis is that the CSI measurement is based on two CMRs, the RI is used to indicate a combination of two ranks, the two ranks are respectively obtained from measurement based on the two CMRs, and the two CMRs respectively come from the two CMR sets and are indicated by the CRI information in the CSI report.

2. The method according to claim 1 wherein the number of bits of the CRI information is $\log_2(K+N)$, wherein K is the total number of CMRs included in the two CMR sets used for the CSI measurement, and N is the number of CMR combinations used for NC-JT measurement in the two CMR sets used for the CSI measurement.

3. The method according to claim 1 , wherein the CRI information indicates one of K CMRs, K being the total number of CMRs included in the two CMR sets used for the CSI measurement, or the CRI information indicates one of N CMR combinations, N being the number of CMR combinations used for NC-JT measurement in the two CMR sets used for the CSI measurement.

4. The method according to claim 1, wherein when the RI is used to indicate the combination of two ranks, values of the RI are mapped to the combination in the following order: {1,1}, {1,2}, {2,1},{2,2}, and the lowest RI value is mapped to {1,1}.

5. A terminal device comprising: a processor and a memory for storing a computer program, wherein the processor is configured to call and run the computer program stored in the memory to cause the terminal device to perform the method according to any one of claims 1 to 4.

6. A computer-readable storage medium for storing a computer program which, when being executed by a device, causes the device to perform the method according to any one of claims 1 to 4.

7. A computer program that causes a computer to perform the method according to any one of claims 1 to 4.

**Patentansprüche**

1. Informationsverarbeitungsverfahren, umfassend:

Durchführen durch eine Endgerätevorrichtung einer Kanalzustandsinformations-, CSI, Messung basierend auf zwei Kanalmessungsressourcen-, CMR-, Sätzen, wobei die Sätze durch eine Netzwerksvorrichtung konfiguriert werden, wobei die beiden CMR-Sätze in einem Kanalzustandsinformationsreferenzsignal-, CSI-RS-, Ressourcensatz mit von Null verschiedener Leistung enthalten sind, der für Kanalmessung verwendet wird, und die CMRs in den beiden CMR-Sätzen unterschiedlich sind;

Angeben (S210) durch die Endgerätevorrichtung einer CSI-Messhypothese durch erste Informationen in einem CSI-Bericht; und

Angeben (S220) durch die Endgerätevorrichtung eines Rangs unter der Messhypothese durch Rangangabe-, RI,-Informationen im CSI-Bericht,

wobei die RI-Informationen eine RI umfassen und die RI zum Angeben von einem oder zwei Rängen verwendet wird,

wenn die Messhypothese lautet, dass die CSI-Messung auf einem einzelnen CMR basiert, wird die RI verwendet, um einen Rang anzugeben, wobei der Rang aus der Messung basierend auf der einzelnen CMR erhalten wird und die einzelne CMR aus den beiden CMR-Sätzen durch Kanalzustandsinformationsreferenzsignalressourc enangabe, CRI, im CSI-Bericht angegeben wird,

wenn die Messhypothese lautet, dass die CSI-Messung auf zwei CMRs basiert, wird die RI verwendet, um eine Kombination aus zwei Rängen anzugeben, wobei die beiden Ränge jeweils aus Messung basierend auf den beiden CMRs erhalten werden und die beiden CMRs jeweils aus den beiden CMR-Sätzen stammen und durch die CRI-Informationen im CSI-Bericht angegeben werden.

2. Verfahren nach Anspruch 1, wobei die Anzahl der Bits der CRI-Information log2(K+N) ist, wobei K die Gesamtzahl der CMRs, die in den beiden CMR-Sätzen eingeschlossen sind, ist, die für die CSI-Messung verwendet werden, und N die Anzahl der CMR-Kombinationen ist, die für die NC-JT-Messung in den beiden für die CSI-Messung verwendeten CMR-Sätzen verwendet werden.

3. Verfahren nach Anspruch 1, wobei die CRI-Informationen eines von K CMRs angeben, wobei K die Gesamtzahl der CMR, die in den beiden für die CSI-Messung verwendeten CMR-Sätzen eingeschlossen sind, ist, oder die CRI-Informationen eine von N CMR-Kombinationen angeben, wobei N die Anzahl der für die NC-JT-Messung verwendeten CMR-Kombinationen in den beiden für die CSI-Messung verwendeten CMR-Sätzen ist.

4. Verfahren nach Anspruch 1, wobei, wenn die RI zur Angabe der Kombination zweier Ränge verwendet wird, Werte der RI der Kombination in der folgenden Reihenfolge zugeordnet werden: {1,1}, {1,2}, {2,1}, {2,2}, und der niedrigste RI-Wert {1,1} zugeordnet wird.

5. Endgerätevorrichtung, umfassend: einen Prozessor und einen Speicher zum Speichern eines Computerprogramms, wobei der Prozessor so konfiguriert ist, dass er das im Speicher gespeicherte Computerprogramm aufruft und ausführt, um zu bewirken, dass die Endgerätevorrichtung das Verfahren nach einem der Ansprüche 1 bis 4 durchführt.

6. Computerlesbares Speichermedium zum Speichern eines Computerprogramms, das, wenn es von einer Vorrichtung ausgeführt wird, bewirkt, dass die Vorrichtung das Verfahren nach einem der Ansprüche 1 bis 4 durchführt.

7. Computerprogramm, das bewirkt, dass ein Computer das Verfahren nach einem der Ansprüche 1 bis 4 durchführt.

**Revendications**

1. Procédé de traitement d'informations, comprenant :

la réalisation, par un dispositif terminal, d'une mesure d'informations d'état de canal, CSI, basée sur deux ensembles de ressources de mesure de canal, CMR, configurés par un dispositif réseau, dans lequel les deux ensembles de CMR sont compris dans un ensemble de ressources de signal de référence d'informations d'état de canal, CSI-RS, de puissance non nulle utilisé pour la mesure de canal, et les CMR dans les deux ensembles de CMR sont différentes ;

l'indication (S210), par le dispositif terminal, d'une hypothèse de mesure de CSI par le biais de premières informations dans un rapport de CSI ; et

l'indication (S220), par le dispositif terminal, d'un rang sous l'hypothèse de mesure par le biais d'informations d'indication de rang, RI, dans le rapport de CSI,

dans lequel les informations de RI comprennent une RI, et la RI est utilisée pour indiquer un rang ou deux rangs, lorsque l'hypothèse de mesure est que la mesure de CSI est basée sur une unique CMR, le RI est utilisé pour indiquer un rang, le rang est obtenu à partir d'une mesure basée sur l'unique CMR, et l'unique CMR est indiquée à partir des deux ensembles de CMR par des informations d'indication de ressources de signal de référence d'informations d'état de canal, CRI, dans le rapport de CSI,
lorsque l'hypothèse de mesure est que la mesure de CSI est basée sur deux CMR, la RI est utilisée pour indiquer une combinaison de deux rangs, les deux rangs sont respectivement obtenus à partir d'une mesure basée sur les deux CMR, et les deux CMR proviennent respectivement des deux ensembles de CMR et sont indiquées par les informations de CRI dans le rapport de CSI.

2. Procédé selon la revendication 1 dans lequel le nombre de bits des informations de CRI est log2(K + N), dans lequel K est le nombre total de CMR incluses dans les deux ensembles de CMR utilisés pour la mesure de CSI, et N est le nombre de combinaisons de CMR utilisées pour une mesure de NC-JT dans les deux ensembles de CMR utilisés pour la mesure de CSI.

3. Procédé selon la revendication 1, dans lequel les informations de CRI indiquent l'une de K CMR, K étant le nombre total de CMR incluses dans les deux ensembles de CMR utilisés pour la mesure de CSI, ou les informations de CRI indiquent l'une de N combinaisons de CMR, N étant le nombre de combinaisons de CMR utilisées pour une mesure de NC-JT dans les deux ensembles de CMR utilisés pour la mesure de CSI.

4. Procédé selon la revendication 1, dans lequel, lorsque la RI est utilisée pour indiquer la combinaison de deux rangs, des valeurs de la RI sont mappées sur la combinaison dans l'ordre suivant : {1, 1}, {1, 2}, {2, 1}, {2, 2}, et la valeur de RI la plus basse est mappée sur {1, 1}.

5. Dispositif terminal comprenant : un processeur et une mémoire pour stocker un programme informatique, dans lequel le processeur est configuré pour appeler et exécuter le programme informatique stocké dans la mémoire pour amener le dispositif terminal à réaliser le procédé selon l'une quelconque des revendications 1 à 4.

6. Support de stockage lisible par ordinateur destiné à stocker un programme informatique qui, lorsqu'il est exécuté par un dispositif, amène le dispositif à réaliser le procédé selon l'une quelconque des revendications 1 à 4.

7. Programme informatique qui amène un ordinateur à réaliser le procédé selon l'une quelconque des revendications 1 à 4.

FIG. 1

FIG. 2

FIG. 3

TRP1    **cooperation**    TRP2

FIG. 4

200

| A terminal device indicates a channel state information (CSI) measurement hypothesis through first information in a CSI report | S210 |

| The terminal device indicates a rank under the measurement hypothesis through rank indication (RI) information in the CSI report | S220 |

FIG. 5

Terminal device 400

410 — Processing unit

FIG. 6

Terminal device 400

410 — Processing unit

420 — Measuring unit

FIG. 7

Communication device 600

Memory
620

Processor
610

Transceiver
630

FIG. 8

Chip 700

Input
interface
730

Processor
710

Memory
720

Output
interface
740

FIG. 9

Communication system 800

Terminal
device

810

Network
device

820

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEDIATEK INC**. CSI enhancement for NCJT and FR1 FDD reciprocity. *3GPP draft, R1-2100583*